Europäisches Patentamt

European Patent Office

Office européen des brevets

(19)

(11) Veröffentlichungsnummer: **0 152 580**
**A2**

## (12) EUROPÄISCHE PATENTANMELDUNG

(21) Anmeldenummer: 84115147.5

(22) Anmeldetag: 11.12.84

(51) Int. Cl.⁴: **G 02 B 27/58**, G 02 F 1/11

(30) Priorität: 10.02.84 DE 3404810

(43) Veröffentlichungstag der Anmeldung: 28.08.85
Patentblatt 85/35

(84) Benannte Vertragsstaaten: **DE FR GB IT NL**

(71) Anmelder: **Siemens Aktiengesellschaft, Berlin und München Wittelsbacherplatz 2, D-8000 München 2 (DE)**

(72) Erfinder: **Storck, Eckhard, Dr.,, Argelsrieder Strasse 27, D-8000 München 71 (DE)**
Erfinder: **Wolff, Ulrich, Dipl.-Phys.,, Geigenbergerstrasse 35, D-8000 München 71 (DE)**

(54) **Fensterfunktion für ein Aperturfenster.**

(57) Es wird eine für die Apodisation der Beugung an der Apertur einer Braggzelle optimale Fensterfunktion und eine daraus abgeleitete, einfacher zu realisierende Fensterfunktion angegeben, die der Wirkung der optimalen Fensterfunktion sehr nahe kommt.

EP 0 152 580 A2

Siemens Aktiengesellschaft          Unser Zeichen
Berlin und München                  VPA    84 P 1094 IE

Fensterfunktion für ein Aperturfenster

Die vorliegende Erfindung betrifft eine Fensterfunktion für eine Apertur nach dem Oberbegriff des Patentanspruchs 1.

Die Dynamik eines Braggzellen-Spektralanalysators in der Umgebung eines Signals ist durch die Beugung des Laserstrahls an der endlichen Apertur der Braggzelle begrenzt und kann durch Apodisation mit geeigneten Fensterfunktionen reduziert werden.

In der Literatur (siehe F.J. Harris: On the Use of Windows for Harmonic Analysis with the Descrete Fourier Transform, Proc. IEEE 66 (1978) 51 - 83 und P. Jacquinot, B. Roizen-Dossier: Apodisation, Progress in Optics III, E. Wolf, ed., North-Holland Publ. Comp., Amsterdam 1964) werden zahlreiche derartige Fensterfunktionen beschrieben, die eine Apodisation der Beugungsnebenmaxima unter ein bestimmtes Zielniveau, insbesondere unter das Zielniveau von -50 dB unter dem Niveau des Beugungshauptmaximums ermöglichen. Aber stets ist damit eine mehr oder weniger starke Verbreiterung des Beugungshauptmaximums verbunden. Dies bedeutet für den Braggzellen-Spektralanalysator eine Verschlechterung der Frequenzauflösung und damit der Dynamik.

Aufgabe der Erfindung ist es, eine optimale oder annähernd optimale Fensterfunktion der genannten Art anzugeben, die eine Apodisation unter ein vorgebbares

Ed 1 Sti/19.1.1984

Zielniveau bei dem theoretisch schmalsten Hauptmaximum oder nahe daran erzeugt.

Diese Aufgabe wird durch die im kennzeichnenden Teil des Patentanspruchs 1 angegebene erst- bzw. zweitgenannte Fensterfunktion gelöst. Eine bevorzugte Anwendung der erfindungsgemäßen Fensterfunktion ist im Anspruch 2 angegeben.

Die erstgenannte erfindungsgemäße Fensterfunktion

$$A(x) = \begin{cases} \dfrac{\cosh^{-1}(1/10^{a}) \, I_{1}(\sqrt{1-(2x/D)^{2}} \cdot \cosh^{-1}(1/10^{a}))}{D\sqrt{1-(2x/D)^{2}}} + \dfrac{1}{2}(\delta(x+\dfrac{D}{2}) + \delta(x-\dfrac{D}{2})) & \text{für } |x| \leq \dfrac{D}{2} \\ 0 & \text{für } |x| > \dfrac{D}{2} \end{cases}$$

weist folgende Vorteile auf:

Sie stellt eine kontinuierliche Fensterfunktion dar, die durch einen geschickten Grenzübergang aus der bekannten diskreten DOLPH-TSCHEBYSCHEFF-Fensterfunktion (siehe C.L. Dolph: A Current Distribution for Broadside Arrays which optimizes the Relationship between Beam Width and Side-Lobe Level, Proc. IRE 34 (1946) 335-348 und C.L. Dolph: Discussion on "A Current Distribution for Broadside Arrays which optimizes the Relationship between Beam Width and Side-Lobe Level", Proc. IRE 35, (1947) 489-492) für diskrete Fenster mit äquidistanten punktförmigen Öffnungen hergeleitet worden ist und die daher garantiert, daß wirklich die im Sinne der oben angegebenen Aufgabe optimale Fensterfunktion gefunden worden ist.

Für diskrete Fenster der Öffnungsweite D, genauer für Fenster mit 2N+1 (N = 1, 2 ...) punktförmigen Öffnungen in gleichem Abstand D/2N voneinander ist das in der Aufgabe genannte Optimierungsproblem in der Antennen-Theorie bereits gelöst worden, und zwar durch die nicht analytisch darstellbare DOLPH-TSCHEBYSCHEFF-Fensterfunktion, deren Fourier-Transformierte gegeben ist durch

das TSCHEBYSCHEFF-Polynom

$$T_{2N}\left(\beta \cos \pi \xi \frac{D}{2N}\right)$$

mit $T_{2N}(\beta) = \sqrt{10^k}$, dh., $\beta = \cosh\left(\frac{1}{2N} \cosh^{-1}(\sqrt{10^k})\right)$

Der obengenannte geschickte Grenzübergang, der zur erstgenannten erfindungsgemäßen kontinuierlichen Fensterfunktion führt, erfolgt unter Abtrennung der Divergenzen, die am Rande der DOLPH-TSCHEBYSCHEFF-Fensterfunktion vorhanden sind.

Die erstgenannte erfindungsgemäße Fensterfunktion liegt als einfacher und übersichtlicher analytischer Ausdruck explizit vor und ihre Fourier-Transformierte, die ihr Spektrum und damit die Form der Beugungsfigur darstellt, ist in ebenso einfacher und übersichtlicher analytischen Form gegeben durch

$$F(\xi) = \cosh\sqrt{(\cosh^{-1}(\sqrt{10^k}))^2 - (\pi\xi D)^2}$$

Für die Halbwerts- und Gesamtbreite des spektralen Maximums der Beugungsfigur ergeben sich aus der erstgenannten erfindungsgemäßen Fensterfunktion ebenfalls einfache analytische Ausdrücke, die zu vorgegebenem Zielniveau die günstigstenfalls erzielbare Auflösung bestimmen. Die Halbwertsbreite des spektralen Maximums ist gegeben durch

$$\xi_1 = \frac{1}{\pi D}\sqrt{(\cosh^{-1}(\sqrt{10^k}))^2 - (\cosh^{-1}(\sqrt{\tfrac{1}{2}10^k}))^2}$$

Die Gesamtbreite des spektralen Maximums ist gegeben durch

$$\xi_0 = \frac{1}{\pi D} \cosh^{-1}(\sqrt{10^k})$$

und entspricht der Breite des spektralen Maximums in Höhe des Zielniveaus.

Bei der Realisierung der erstgenannten erfindungsgemäßen Fensterfunktion können die beiden Deltafunktionen am Rand der Apertur beispielsweise durch zusätzlich eingespiegelte Kugelwellen erzeugt werden. Die Deltafunktionen liefern - verteilt auf ein optisch auflösbares Element in der Größenordnung einer Wellenlänge $\lambda$ - durchaus endliche Werte.

Man kann aber die beiden deltafunktionsartigen Divergenzen einfach abziehen. Dadurch erhält man aus der erstgenannten erfindungsgemäßen Fensterfunktion folgende Fourier-Transformierte:

$$F(\xi) = \cosh\sqrt{(\cosh^{-1}(\sqrt{10^k}))^2 - (\pi\xi D)^2} - \cos(\pi\xi D)$$

In der Umgebung des Hauptmaximums besteht diese Fourier-Transformierte aus zwei Kosinusschwingungen, die sich konstruktiv addieren, d.h. das Zielniveau verdoppeln können. Damit das Zielniveau um den Faktor $1/\sqrt{10^K}$ unter dem Hauptmaximum bleibt, muß dieses deshalb verdoppelt werden, d.h. es muß der Ausdruck $\sqrt{10^K}$ durch den Ausdruck $2 \cdot \sqrt{10^K}$ ersetzt werden. Dadurch ergibt sich die neue Funktion

$$\overline{F}(\xi) = \cosh\sqrt{(\cosh^{-1}(2 \cdot \sqrt{10^k}))^2 - (\pi\xi D)^2} - \cos(\pi\xi D)$$

deren Quadrat $|\overline{F}(\xi)|^2$ einen Verlauf der Beugungsnebenmaxima festlegt, der tatsächlich unter dem Zielniveau liegt, beispielsweise unter -50 dB, und aus der sich die zweitgenannte erfindungsgemäße Fensterfunktion ergibt zu

$$A(x) = \begin{cases} \dfrac{I_1(\sqrt{1-(2x/D)^2}\,\cosh^{-1}(2\sqrt{10^k}))}{\sqrt{1-(2x/D)^2}} & \text{für } |x| \leq \dfrac{D}{2} \\[4mm] 0 & \text{für } |x| > \dfrac{D}{2} \end{cases}$$

die keine Divergenzen mehr am Rand aufweist. Sie läßt sich einfacher realisieren, als die erstgenannte erfindungsgemäße Fensterfunktion und ihre Frequenzauflösung liegt nahe am theoretischen Optimum.

Die Halbwertsbreite des Hauptmaximums ihres Spektrums ist gegeben durch

$$\xi_1 = \frac{1}{\pi D} \sqrt{\left(\cosh^{-1}(2\sqrt{10^k})\right)^2 - \left(\cosh^{-1}(\sqrt{10^k \cdot 2})\right)^2}$$

und die Gesamtbreite in Höhe des Zielniveaus gegeben durch

$$\xi_0 = \frac{1}{\pi D} \cosh^{-1}(2 \cdot \sqrt{10^k})$$

Mit einer erfindungsgemäßen Fensterfunktion konnte ein Braggzellen-Spektralanalysator mit wesentlich verbesserter Dynamik (bisher 30 dB) aufgebaut werden, bei dem die gemessenen Dynamikwerte betragen: Dynamikbereich 60 dB, 1-Ton-Dynamik 50 dB (Frequenzabstand 8 MHz), 2-Ton-Dynamik 45 dB.

Die Erfindung wird beispielhaft anhand der beigefügten Figuren näher erläutert. Von den Figuren zeigen:

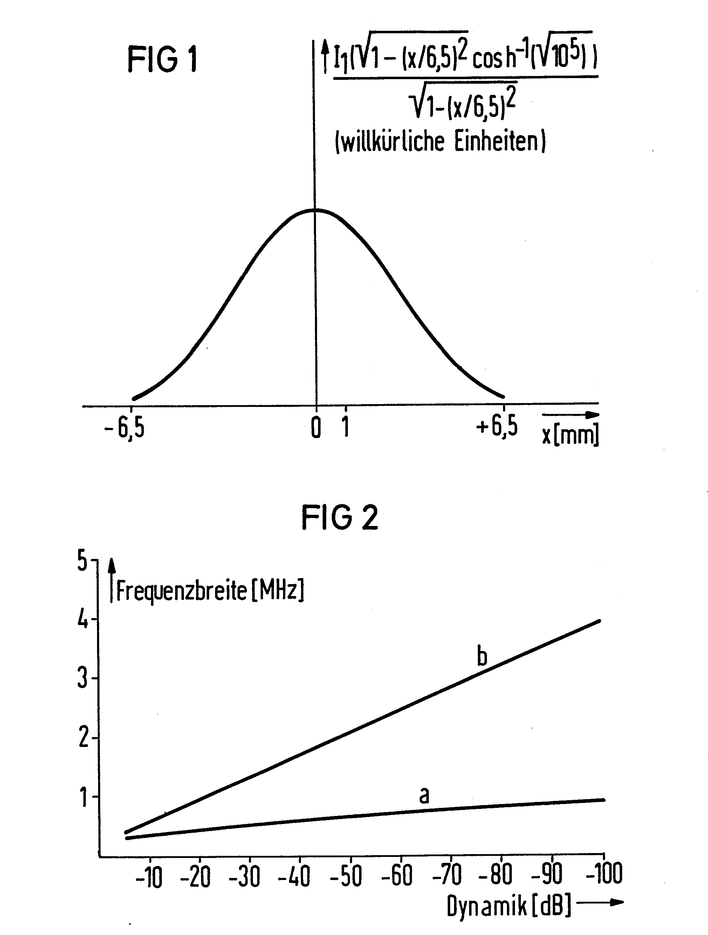

Figur 1 die Funktion

$$I_1\left(\sqrt{1-(x/6{,}5)^2} \cdot \cosh^{-1}(\sqrt{10^5})\right) / \sqrt{1-(x/6{,}5)^2}$$

über der Ortskoordinate x in einem Bereich x ≤ 6,5 mm also über einem Aperturfenster der Öffnungsweite D = 13 mm, wobei die Einheit auf der Ordinate willkürlich gewählt worden ist;

Figur 2 die Halbwertsbreite (a) und die Gesamtbreite (b) des Hauptmaximums als Funktion der geforderten Dynamik bei optimaler Apodisation, wobei auf der Ordinate die Frequenzbreite in MHz aufgetragen ist und die relativ geringe Änderung der Halbwertsbreite (a) über der Dynamik zu beachten ist; und

Figur 3 das Spektrum $\overline{F}(\xi)$, das zur zweitgenannten Fensterfunktion gehört.

Den Figuren liegen folgende Werte zugrunde: k = 5, was einem Zielniveau von - 50 dB entspricht. Die Öffnungsweite D des Aperturfensters ist 13 mm gewählt. Des weiteren ist angenommen, daß die Braggzelle in einem Lithiumniobatkristall realisiert ist, in dem die Schallgeschwindigkeit c = 6,6 km/s beträgt.

Für den Fall der erstgenannten Fensterfunktion beträgt danach die mit dem Doppelten dieser Schallgeschwindigkeit multiplizierte Halbwertsbreite des Hauptmaximums, die der 3-dB-Breite dieses Maximums entspricht, $2 \cdot \xi_1 \cdot c$ = 0,668 MHz. Die entsprechende Gesamtbreite des Hauptmaximums, die der 50-dB-Breite dieses Maximums entspricht, beträgt in diesem Fall $2 \cdot \xi_0 \cdot c$ = 2,08 MHz.

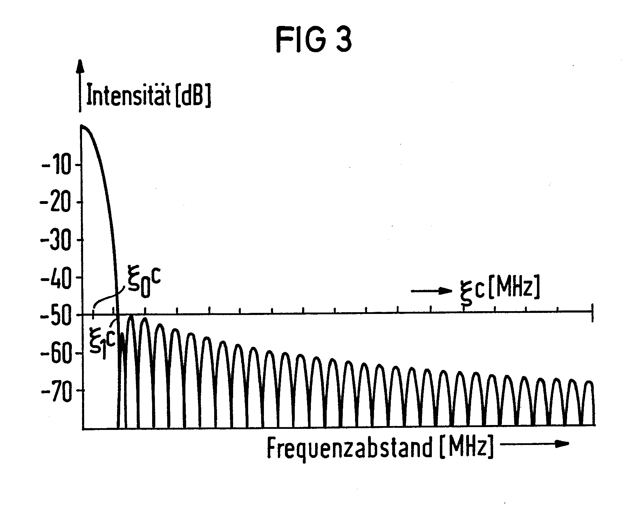

Für den Fall der zweitgenannten Fensterfunktion gilt für die entsprechende 3-dB-Breite oder Halbwertsbreite $2 \cdot \xi_1 \cdot c$ = 0,71 MHz und für die entsprechende 50-dB-Breite oder Gesamtbreite $2 \cdot \xi_0 \cdot c$ = 2,3 MHz. Diese Werte sind der Figur 3 entnehmbar und sie liegen nur geringfügig über den oben angegebenen Werten für das theoretische Optimum gemäß der erstgenannten Fensterfunktion.

2 Patentansprüche
3 Figuren

Patentansprüche

1. Fensterfunktion (A(x)) zur Apodisation der Beugung an einer Apertur, insbesondere zur Apodisation der Beugung an der Apertur einer Bragg-Zelle, wobei die Fensterfunktion (A(x)) eine räumliche Intensitätsverteilung über einer bestimmten Ortskoordinate (x) bestimmt, die der durch die Apertur tretenden Strahlung aufzuprägen ist, d a d u r c h   g e k e n n z e i c h n e t , daß die Fensterfunktion (A(x)) bis auf einen vorgebbaren Normierungsfaktor durch die Funktion

$$A(x) = \begin{cases} \dfrac{\cosh^{-1}(\sqrt{10^k})\, I_1\left(\sqrt{1-(2x/D)^2}\cdot\cosh^{-1}(\sqrt{10^k})\right)}{D\sqrt{1-(2x/D)^2}} + \dfrac{1}{2}\left(\delta(x+\tfrac{D}{2})+\delta(x-\tfrac{D}{2})\right) & \text{für } |x| \le \tfrac{D}{2} \\[4mm] 0 & \text{für } |x| > \tfrac{D}{2} \end{cases}$$

oder durch die Funktion

$$A(x) = \begin{cases} \dfrac{I_1\left(\sqrt{1-(2x/D)^2}\cdot\cosh^{-1}(2\sqrt{10^k})\right)}{\sqrt{1-(2x/D)^2}} & \text{für } |x| \le \tfrac{D}{2} \\[4mm] 0 & \text{für } |x| > \tfrac{D}{2} \end{cases}$$

definiert ist, wobei $I_1$ (...) die modifizierte Besselfunktion erster Ordnung bezeichnet, k eine vorgebbare Zahl ist, welche das Zielniveau der Apodisation bestimmt, D die Öffnungsweite der Apertur längs der Ortskoordinate (x) bedeutet und $\delta($ ...) die Dirac'sche Deltafunktion bezeichnet.

2. Anwendung einer Fensterfunktion nach Anspruch 1 in einem Braggzellen-Spektralanalysator zur Apodisation der Apertur der Braggzelle des Analysators.

FIG 1

$$\frac{I_1\left(\sqrt{1-(x/6,5)^2}\cosh^{-1}(\sqrt{10^5})\right)}{\sqrt{1-(x/6,5)^2}}$$

(willkürliche Einheiten)

-6,5     0   1     +6,5   x[mm]

FIG 2

Frequenzbreite [MHz]

b

a

-10   -20   -30   -40   -50   -60   -70   -80   -90   -100

Dynamik [dB] ⟶

FIG 3